# EUROPEAN PATENT SPECIFICATION

(11) **EP 1 364 354 B1**
(45) Date of publication and mention of the grant of the patent: **20.04.2005**
(21) Application number: 01271618.9
(22) Date of filing: 19.12.2001
(51) Int. Cl.: G09B 7/00

(54) **AN INFORMATION PROVIDING APPARATUS**
INFORMATIONSBEREITSTELLUNGSVORRICHTUNG
DISPOSITIF DE DIFFUSION D'INFORMATIONS

(30) Priority: 19.12.2000 GB 0030969
(43) Date of publication of application: 26.11.2003
(73) Proprietor: Innovision Research & Technology PLC, Wokingham, Berkshire RG40 1XS (GB)
(72) Inventor: PITT-PLADDY, Glen, Innovision Res. & Tech. Plc, Wokingham, Berkshire RG40 1XS (GB); FEUCHTWANGER, David, Innovision Res. & Tech. Plc, Wokingham, Berkshire RG40 1XS (GB); WHITE, Andrew, David, Innovision Res. & Tech. Plc, Wokingham, Berkshire RG40 1XS (GB); HILLS, Andrew, Innovision Res. & Technology Plc, Wokingham, Berkshire RG40 1XS (GB); UNDERWOOD, Richard, Innovision Res. & Tech. Plc, Wokingham, Berkshire RG40 1XS (GB)
(74) Representative: Beresford, Keith Denis Lewis
(86) International application number: PCT/GB2001/005680
(87) International publication number: WO 2002/050802

(56) References cited:
- EP-A- 0 314 312
- WO-A-99/18487
- US-A- 3 473 027
- US-A- 4 567 370
- US-A- 4 983 817

## Description

This invention relates to an information providing system and to a detector for enabling detection of elements in printed matter that cannot be easily visually detected. This invention has particular, but not exclusive, application to games and educational toys.

US-A-4604065 describes teaching or amusement apparatus consisting of a substrate bearing printed intelligence and a detector adapted to discriminate between printed areas on the substrate on the basis of non-visually distinguishable properties of those printed areas. In an embodiment described in US-A-4604065, the detector comprises an infrared radiation emitter and receiver and the printed substrate is printed taking advantage of the fact that, although black ink and "process black" (that is a black colour produced by superposition of yellow, cyan and magenta ink) cannot easily be visually distinguished from one another, process black has different infrared reflection properties from black ink. This enables, as described in US-A-4604065, visually indistinguishable black areas to be distinguished by using an infrared pen comprising an infrared radiation transmitter and an infrared receiver for receiving infrared radiation reflected by the black ink areas on the printed substrate. Because areas of black ink and areas of process black cannot be easily visually distinguished, this enables infrared distinguishable information to be hidden from the user in the printed substrate. For example, where the printed substrate carries a question and a number of possible answers to that question, the correct answer may be printed using black ink while the incorrect answer may be printed using process black so that the detector pen can distinguish the correct answer. When the user places the detector pen over his or her selected answer, the amount of infrared radiation reflected by the chosen answer will depend upon whether or not the answer was printed using black ink or process black. The detector thus provides a signal indicating whether or not the correct answer has been selected enabling control apparatus to inform the user whether or not they have selected the correct answer. For example, the control apparatus may provide an audible message to the user such as "that answer is correct" or "that answer is incorrect", depending upon the signal supplied to the control apparatus by the detector.

Although the detector described in US-A-4604065 operates satisfactorily, it does require the images or patterns on the printed substrate to be relatively dark. This means that a relatively large amount of ink must be deposited onto the substrate which can, dependent upon the type of the substrate, lead to bleeding and other problems. In addition, the arrangement described in US-A-4604065 requires the detector to be shielded from ambient light making it difficult for the user to see clearly the printed area that he has selected on the printed substrate.

US-A-4567370 describes security and encoding techniques in which a sample is treated with a phosphur that emits when excited by an intense short wave length UV radiation source. The target area may be a spot of about 10mm and that target area may be treated with two phosphurs that are excited by the same wavelength but emit at different wavelengths so as to provide the targe area with a two-wavelength signature.

EP-A-0314312 describes a method and apparatus for detecting inks that rely on irradiating the substrate with at least two different wavelengths, at least one of which is chosen to correspond to an absorption band of an ink expected to be present in the sample under test, wherein a correlation technique is used to address issues of broadband noise due to ambient light.

W099/18487 describes methods and systems for providing human/computer interfaces using an encoded physical medium carrying a marker capable of generating light within a particular wavelength range either by reflection or through luminescence. The marker may be invisible infrared ink applied over encoded information or the marker may constitute a number of different encoding colours that together provide a signature.

According to the present invention, there is provided an information providing system as set out in claim 1.

The information providing system may be a toy or game, for example an educational game.

In an embodiment, the fluorescent ink is adapted to fluoresce at a wavelength of about 700 nanometres in response to excitation by a wavelength in the region of 660 nanometres.

In an embodiment, the detector also comprises an emitter for emitting radiation to cause said one ink to fluoresce.

In an embodiment, the printed matter on the substrate comprises at least one question in combination with a number of possible answers with a correct answer being printed using one of the two inks and an incorrect answer being printed with the other of the two inks so that, when positioned over an answer, the detector provides a signal which depends upon the fluorescent properties of the ink used to produce the answer and can thus be used to determine whether or not the user has selected the or a correct answer. In an embodiment, an ink dot may be printed next to each answer and the correct answer may be printed with the fluorescent ink.

In another embodiment, the substrate is printed in conventional manner with one or more images and a matrix of very fine fluorescent ink dots is printed over the image to provide a tint to the image. Typically the print duty for the matrix may be as low as 5% (that is the fluorescent ink dots cover 5% of the total area of the image) so that the matrix looks like a very faint colour (grey in the case where the ink is black ink) wash over the whole picture.

In this embodiment, areas of the faint colour wash where the fluorescent ink is used can be distinguished by the detector from areas of the faint colour wash where the non-fluorescent ink is used.

In another embodiment, where the substrate carries graphic or cartoon designs, then the outline of the graphic or cartoon designs can be printed using either the fluorescent or non-fluorescent ink so enabling different graphic or cartoon designs to be distinguished from one another by the detector.

The inks may be a non-fluorescent and a fluorescent black ink.

Embodiments of the present invention will now be described, by way of example, with reference to the accompanying drawings, in which:
Figure 1 shows a schematic diagram of games system embodying the invention comprising a printed substrate and a detector pen;
Figures 2 to 4 show plan views of different types of printed substrate that may be used in apparatus embodying the present invention;
Figure 5 shows a diagrammatic view of the detector pen shown in Figure 1 with the casing cut away to show internal components of the detector pen;
Figure 6a shows a schematic side view of an optical head assembly of the detector pen shown in Figure 5;
Figure 6b shows a top view of the optical head assembly shown in Figure 6a;
Figure 6c shows a cross-sectional view taken along the line AA in Figure 6b of the optical head assembly;
Figure 6d shows a bottom view of the optical head assembly shown in Figure 6a;
Figure 7 shows a block diagram of functional components of the detector pen shown in Figure 5;
Figure 8 shows a more detailed block diagram of some of the functional components of the detector pen shown in Figure 7;
Figure 9 shows a circuit diagram of a control PCB of the detector pen shown in Figure 5;
Figure 10 shows a circuit diagram of an amplifier PCB carried by the optical head assembly shown in Figure 6a;
Figure 11 shows a flow chart for illustrating steps carried out by a control. processor shown in Figure 8;
Figure 12 shows a functional block diagram of functional components of another example of a detector pen; and
Figure 13 shows a circuit diagram illustrating one way of implementing the functional components shown in Figure 12.

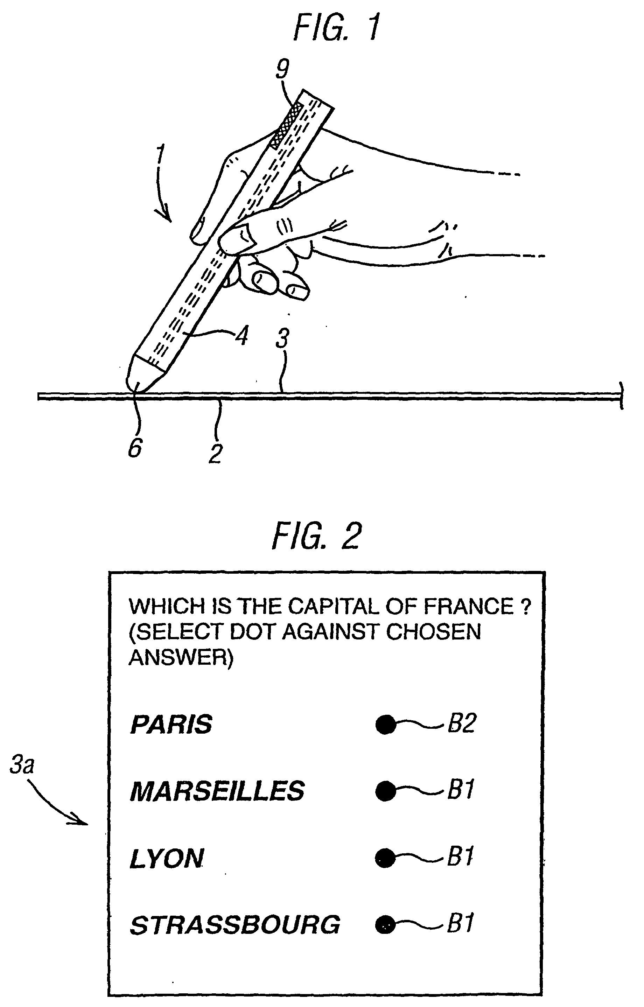

Referring now to the drawings, Figure 1 shows a schematic side view of games apparatus 1 embodying the invention. The games apparatus 1 comprises a substrate 2 having a printed surface 3. The substrate 2 may be formed of paper, cardboard, wood or a plastics material. The substrate may be a single sheet or may form a page of a book.

The printing on the printed surface 3 is effected using conventional printing techniques, in this example, lithographic printing techniques. The actual images and/or information printed on the printed surface 3 will, of course, depend upon the particular game. In accordance with the present invention, the inks used to print on the printed surface include two inks which to the non-colour blind human eye have the same or substantially the same colour but one of which fluoresces when excited with a particular wavelength or band of wavelengths of radiation. In this embodiment, the two inks are both black inks.

The games system also comprises a detector pen 4 which, as will be described in greater detail below, has a radiation emitter for emitting radiation at the excitation wavelength of the fluorescent ink and a radiation receiver for receiving fluorescent radiation emitted by the fluorescent ink in response to excitation by the radiation emitted by the radiation emitter.

The manner in which the fluorescent black ink is applied to the printed substrate will also depend upon the particular game to be played using the printed substrate. Figures 2 to 4 show different printed substrates 3a, 3b and 3c to illustrate different ways in which the fluorescent black ink may be applied to the printed substrate to provide on the printed substrate information that can not be detected visually but can be detected by the detector pen 1.

The printed substrate 3a shown in Figure 2 is in the form of a question card from an educational game. As shown in Figure 2, the card has printed on it the question "what is the capital of France" with an instruction to select an answer by pointing the detector at the black dot adjacent to the answer. In this case, the text may be printed using conventional inks (black or other colour ink) while the black dots B1 adjacent to the incorrect answers are printed with one of the non-fluorescent and the fluorescent black inks and the black dot B2 adjacent to the correct answer is printed with the other of the non-fluorescent ink and the fluorescent black inks. In this example, the black dot adjacent to the correct answer (Paris) is printed with the fluorescent ink. It will, of course, be appreciated that the specific question and answers shown in Figure 2 are shown only by example and that the question may be any general knowledge or specific subject matter question.

When the games system has printed substrate of the form shown in Figure 2; then the detector pen will determine whether or hot the user has selected the black dot presenting the correct answer by detecting whether or not infrared radiation is emitted by the black dot in response to the excitation radiation emitted by the detector pen.

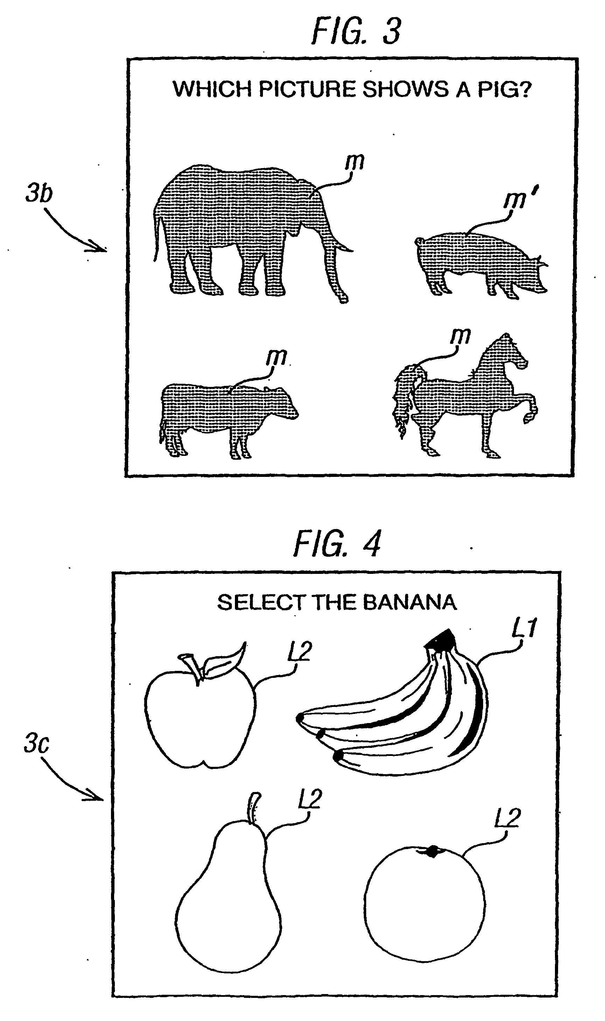

The printed substrate 3b shown in Figure 3 also represents a card of a question and answer game. In this case, however, the question and answer game is designed for relatively young children and accordingly the question asks the user to select a particular picture. In this specific example shown, the card asks the user to select the picture showing a pig. In this example, the images are printed in conventional manner and a matrix M of very small black dots is printed over the entirety of the substrate (or as shown at least the image areas) using standard lithographic printing techniques so as to provide a faint barely visible grey wash over the entirety of the card (or at least the images). The matrix or mesh in Figure 3 has been exaggerated and the actual image diminished in appearance to illustrate this. Typically, the print duty ratio for the black dots will be as low as 5% (that is the black dots occupy only 5% of a unit area of the card). In this case, one of the non-fluorescent and fluorescent black inks would be used to form the dot matrix over the incorrect answers and the other of the non-fluorescent and fluorescent black inks will be used to form the dot matrix over the correct answer. In this example, the fluorescent ink is used to form the dot matrix m¹ over the image of the pig, that is over the correct answer. The printing of the non-fluorescent and fluorescent black inks as a matrix of very fine dots enables the visible effect of the black ink to be minimised but still allows the presence of the fluorescent ink to be detected.

The fine matrix or colour wash technique shown in Figure 3 is particularly suited to the case where the images on the printed substrate or card are photo-quality, or half-tone images. Figure 4 shows another technique that may be used where the images are line drawings (including letters and numbers) or are cartoon characters having a distinct line outline. In this case, the substrate carries line drawings of images of fruit and the user is asked to select the banana. The lines L forming the images are formed of black ink with at least a substantial portion of the lines forming either the correct (lines L1) or the incorrect answers (lines L2) being formed using the fluorescent ink so that the detector pen 1 can distinguish the correct answer by determining whether or not it receives fluorescence in response to its excitation radiation. In this example, the images will be printed on the substrate or card so that there is always a minimum area of black within the area on the printed substrate falling within the acceptance cone of the detector which may be, for example, a circle of diameter 12 millimetres. The minimum area will depend upon the design of the pen, electronics and optics may typically be 20% of the total area.

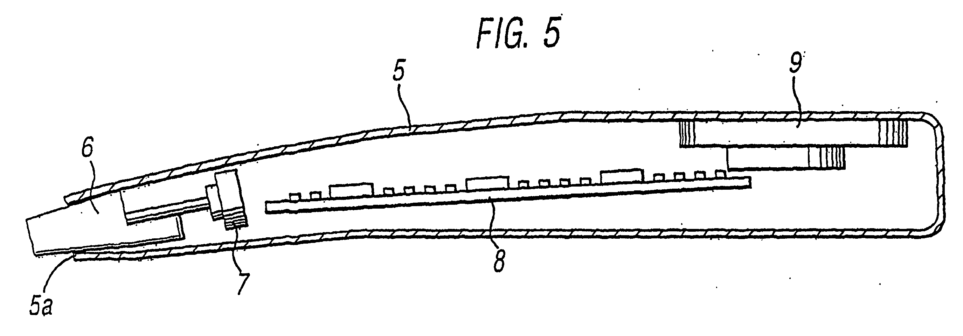

Figure 5 shows a schematic view of the detector pen with a casing 5 of the detector pen cut away to show the arrangement of components within the pen. The casing 5 has a generally elongate tubular configuration with an open end 5a from which an optical head assembly 6 protrudes. The optical head assembly 6 is slidably mounted within the open end 5a of the casing so that positioning of the optical head assembly 6 on the printed substrate in the manner shown in Figure 1 causes the optical head assembly to retract into the casing 5, against spring biassing (not shown). The spring biassing may be separate or may be part of the switch. A push button switch 7 is mounted within the casing 5 behind the optical head assembly 6 is arranged to be depressed by the optical head assembly. Although not shown in Figure 5, the switch 7 is coupled to a control PCB 8 so that, when the optical head assembly 6 moves into the casing 5 and depresses the switch 7, the detector pen 1 is switched into a sensing mode in which the optical head assembly 6 is caused to emit radiation and to detect any fluorescence emitted from the region of the printed substrate 3 to which the optical head assembly 6 is directed. The control PCB 8 is coupled to receive the output from the optical head assembly 6 and to drive a loudspeaker 9 in accordance with the output so as to advise the use whether or not their selected answer is correct.

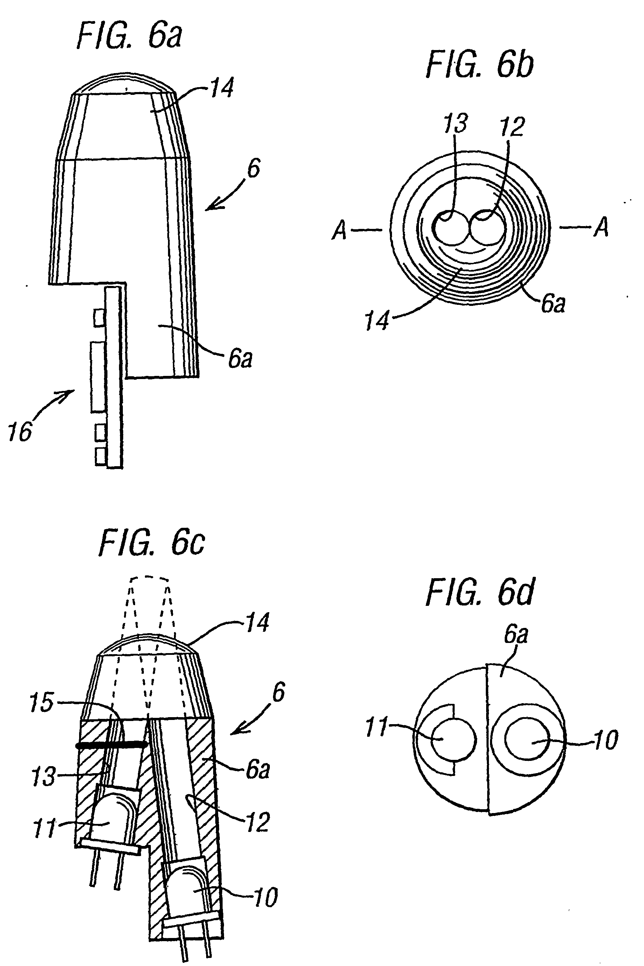

Figures 6a to 6d shows the optical head assembly 6 in greater detail. The optical head assembly 6 carries a red LED 10 having its peak wavelength at 660 nanometres. The red LED may be a type W03304-RUC LED produced by Waitrony of Hong Kong. The optical head assembly also carries a silicon photodiode 11. The silicon photodiode may be a PD-32BRC photodiode produced by Waitrony. The LED 10 is mounted in a 3 millimetre clear plastic package while the photodiode 11 is mounted in a 3 millimetre LED package. The LED 10 and photodiode 11 are mounted to an opaque plastics material body 6a forming the main component of the optical head assembly so that the LED 10 is mounted at an innermost end of a first light guide or channel 12 while the photodetector 11 is mounted at the inner end of a second channel or light guide 13 of the body 6a. The channels 12 and 13 are angled towards one another to provide, as shown by the dashed lines in Figure 6c, an overlap between the beam emitted by the LED 10 and the acceptance angle of the photodetector 11. A lens 14 transparent to radiation emitted by the LED 10 and the radiation to which the photodetector 11 is responsive is fixed to the assembly body 6a so as to collect infra red radiation from the printed substrate surface and to maintain the optimum overlap with the emitter beam acceptance angle when the lens 14 contacts the surface. An optical filter 15 is provided in the light path through to the channel 13 to the photodetector 11. In this example, the optical filter comprises two layers of photographic lighting film to reduce visible ambient light levels. Two colours (red and blue) of photographic lighting film are used to produce a high path optical filter reducing optical wavelengths up to the detection wavelength or wavelengths range of the photodetector, in this case 700 nanometres. An amplifier PCB 16 is mounted to a support surface provided by the optical head assembly body to amplify the output of the photodetector 11 before supply to the control PCB.

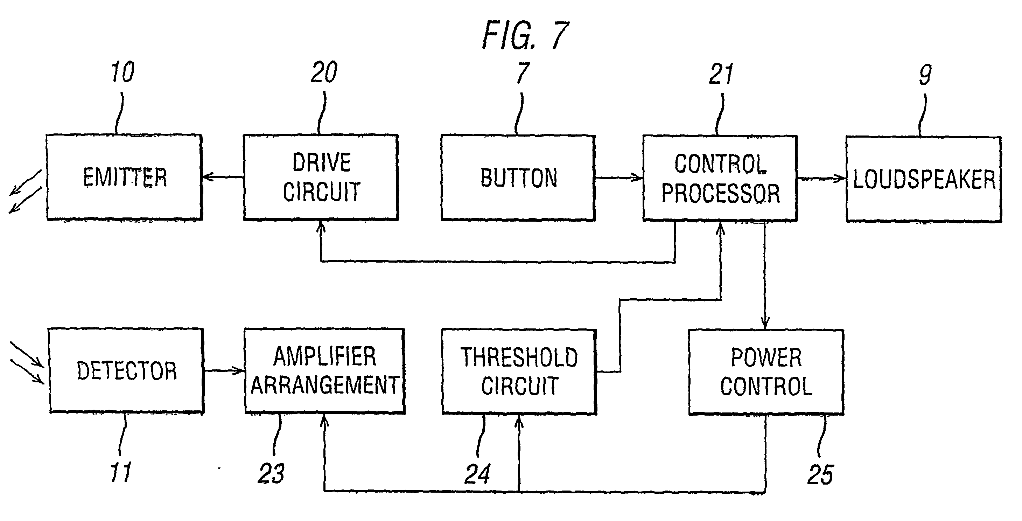

Figure 7 shows a block diagram of functional components of the detector pen 1. The detector pen is battery-powered. However, in the interest of simplicity the power supply and connections from the power supply to the various components are omitted in Figures 7 to 10.

The detector pen has a control processor 21 which maintains the detector pen in a standby mode until the control processor detects activation of the switch 7 by the user pressing the optical head assembly 6 onto the printed substrate 3 or the like.

The control processor 21 is coupled to an LED drive circuit 20 which drives the emitter 10 to emit radiation at about 660 nanometres when the switch 7 is activated.

The output of the photodetector 11 is coupled to an amplifier arrangement 23 connected to a threshold circuit 24 which produces a pass/fail or high/low logical level signal, depending on whether or not the photodetector 11 detects any fluorescence from the area of the printed substrate to which the emitter 10 is pointed. This logical level signal is input to the control processor 21. In response to receipt of the logical level signal, the control processor 21 retrieves one of two audio data files, dependent upon the level of the logic signal. The control processor 21 is coupled to drive the loudspeaker 9 in accordance with the retrieved audio data file.

In order to reduce current consumption in the standby mode, the detector pen has a power control circuit 25 which, under the control of the control processor 21, ensures that the amplifier arrangement 23 and threshold circuit 24 are only powered up after the switch 7 has been activated.

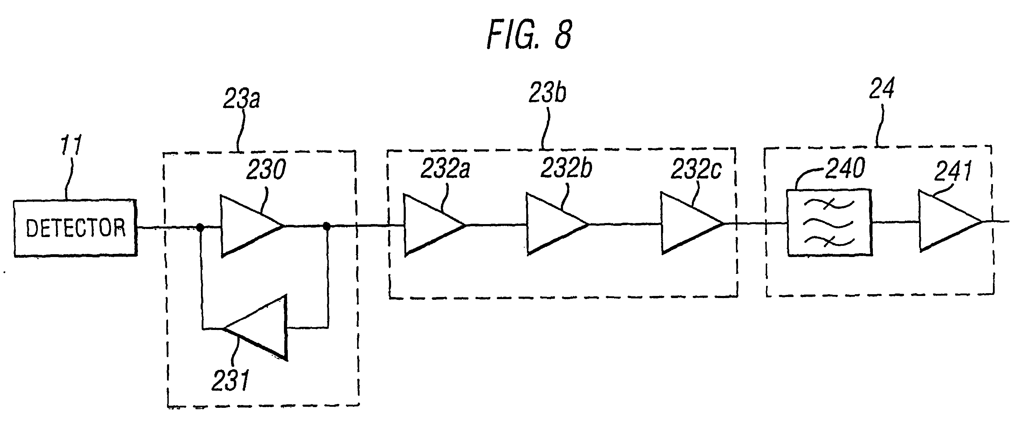

Figure 8 shows a more detailed block diagram of the detector, amplifier arrangement and threshold circuit components shown in Figure 7.

As shown in Figure 8, the amplifier arrangement 23 comprises a preamplifier stage 23a which is provided on the amplifier PCB 16 (see Figure 6a) and therefore forms part of the detector assembly. The preamplifier stage consists of a current to voltage converter 230 and an integrator 231 whose output is fedback to the current to voltage converter 230 to compensate for varying levels of ambient light. The output of the current-to-voltage converter 230 is supplied to an amplifier stage 23b of the amplifier arrangement. The amplifier stage 23b is provided on the control PCB 8. In this embodiment, the amplifier stage consists of three non-inverting amplifiers 232a to 232c. The output of the final non-inverting amplifier 232c is supplied to the threshold circuit 24 which in this embodiment consists of a band pass filter 240 coupled to a comparator 241 which provides the pass/fail logical level signal for input to the control processor 21.

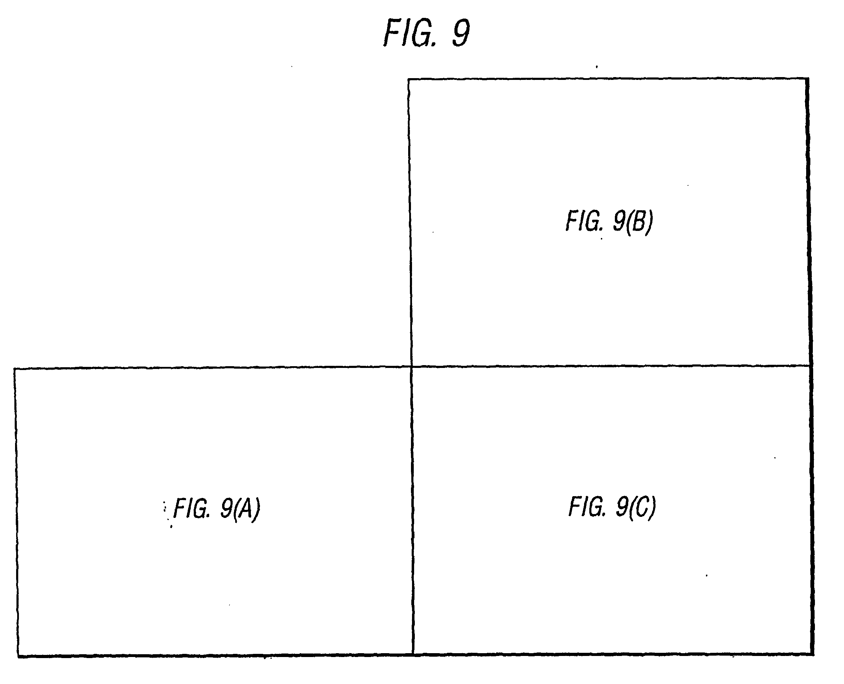

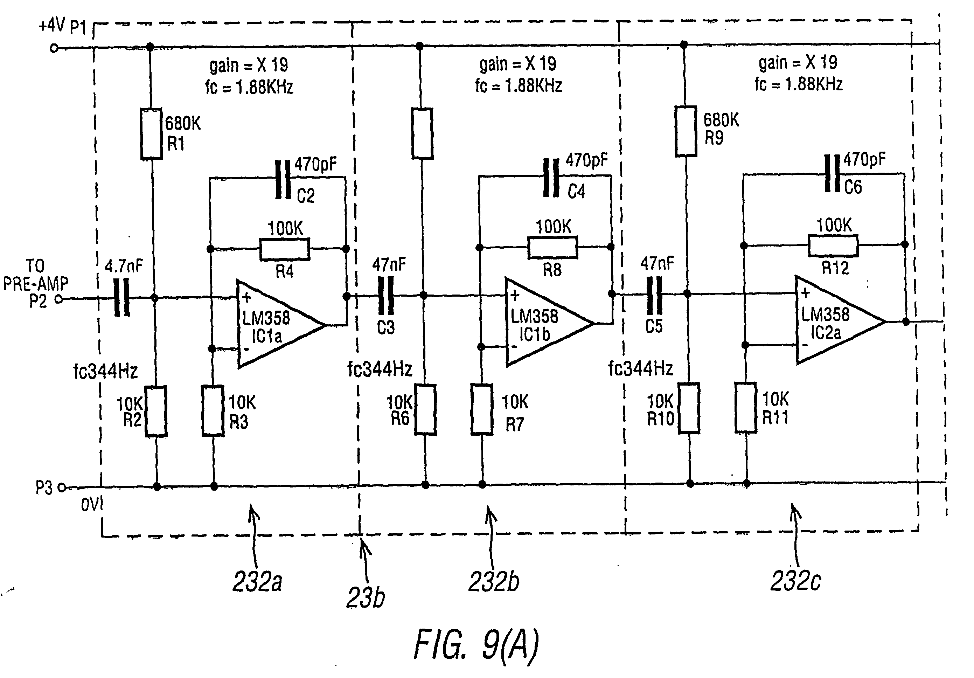

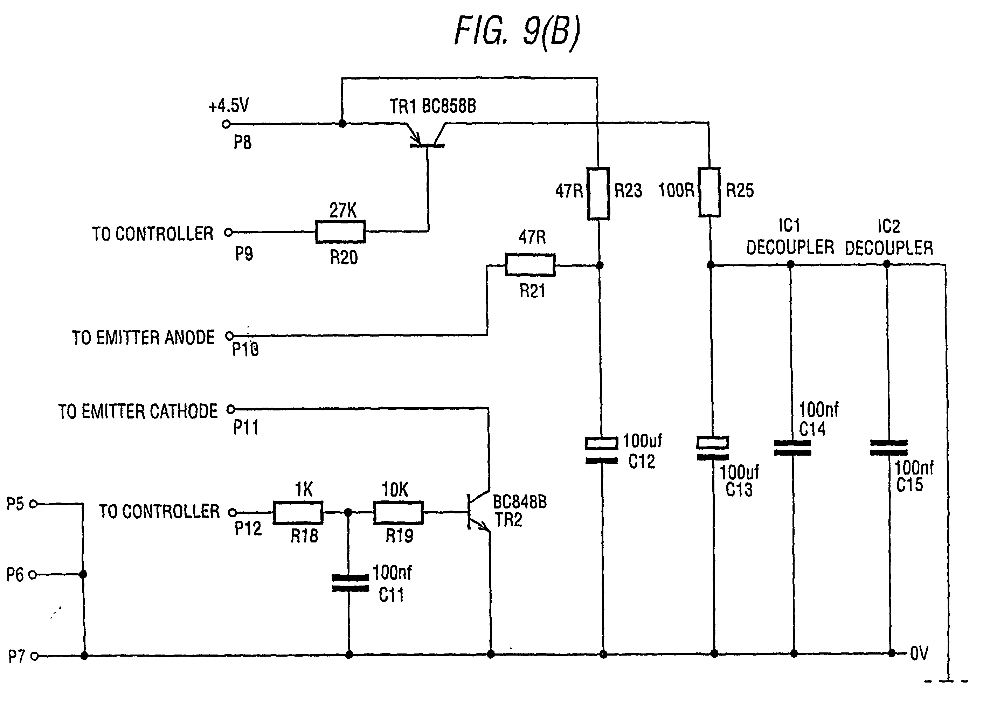

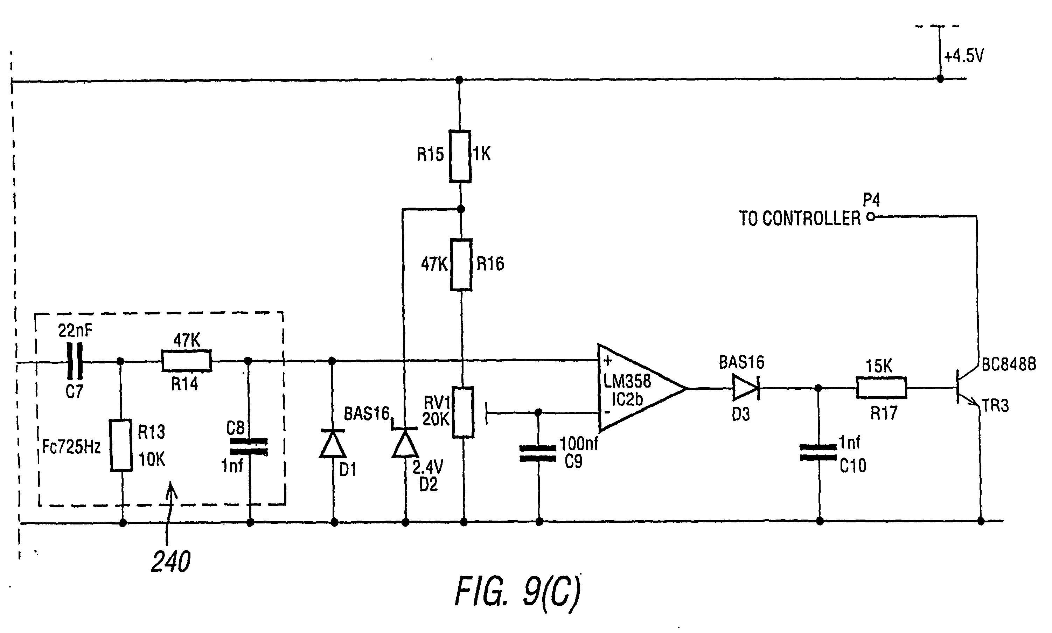

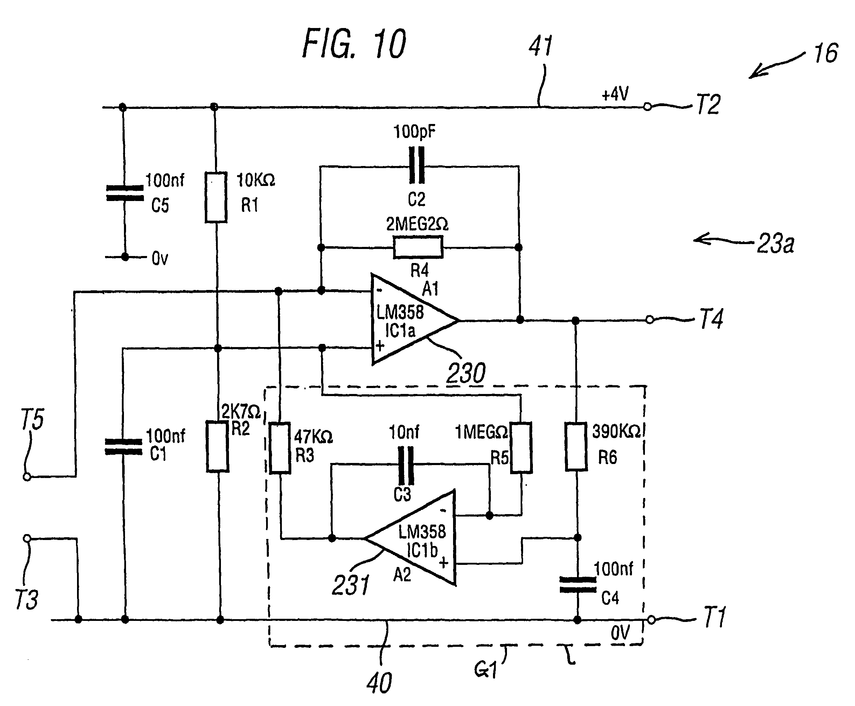

Figure 9 shows a circuit diagram of the control PCB (omitting the control processor) while Figure 10 shows a circuit diagram of the amplifier PCB 16.

Referring now to Figure 10, the amplifier PCB 16 shown in Figure 6a carries the preamplifier stage 23a shown in Figure 8. The amplifier PCB has first and second power supply rails 40 and 41 coupled by terminals T1 and T2, respectively to the negative and positive terminals of the battery (not shown) via switch TR1 in Figure 9. The power supply rail 40 is coupled to an input terminal T3 which is coupled to the anode of the photodetector 11. The cathode of the photodetector 11 is coupled, via terminal 75, to the negative input pin of an amplifier A1 forming the basis of the current to voltage converter 230. The output of the amplifier A1 is supplied to an output terminal T4 coupled to the control PCB 8 so as to supply the amplified signal to the amplifier stage 23b. The output of the amplifier A1 is coupled to the positive input of an amplifier A2 forming the basis of the integrator 231 via an RC low pass filter formed by a resistor R6 coupled with a capacitor C4. The components shown within the phantom line box labelled G1 form a gyrator, enabling provision of an inductor-less filter to filter out unwanted signals such as ambient artificial light which may have a mains AC (50 or 60 Hz) component. The output of the integrator 231 is fedback, as mentioned above, to the current to voltage converter 230 via a resistor R3 to compensate for varying levels of ambient light. A potential divider formed by resistors R1 and R2 is used to bias the output of the current to voltage converter 230 to approximately 1 volt to allow the preamplifier stage 23a to operate on a single supply rail. The cathode of the photodetector 11 is coupled to a terminal T5 coupled to the negative input of the amplifier Al.

The output from the current to voltage converter 230 on output terminal T4 is supplied to an input terminal P2 of the amplifier stage 23b which, as mentioned above, consists of three non-inverting amplifiers 232a to 232c, the detailed circuits of which are shown in Figure 9. The output of the final non-inverting amplifier 232c is supplied to the band pass filter 240 which, as shown in Figure 9, consists of capacitor C7, resistor R13, resistor R14 and capacitor C8. The output of the band pass filter 243 is supplied to the positive input of an amplifier A3 forming the basis of the comparator 241. The comparator reference signal is derived from a simple zener diode (diode D2 in Figure 9) regulator. The output of the comparator 241 is supplied to an input terminal P4 of the control processor 21 via a pulse stretcher formed by diode D3, capacitor C10 and resistor R17 and a buffer provided by an open collector transistor TR3. The pulse stretcher allows the pass/fail signal to be read by the control processor 21 on its next instruction cycle.

The drive circuit to the LED or emitter 10 comprises an NPN transistor current amplifier provided by transistor TR2 driven by the control processor via terminal P12. The base drive to the transistor TR2 passes through a RC low pass filter formed by resistor R18 and capacitor C11 to reduce the radiated noise emitted from the LED 10. The collector of the transistor TR2 is coupled to a terminal P11 coupled to the cathode of the LED 10. A current limiting resistor R21 is coupled to the terminal P10 of the PCB that is coupled to the LED anode to reduce the drive current to the LED to approximately 20 milliamps. The supply to the drive circuit passes through a RC low pass filter provided by resistor R23 and capacitor C12 to reduce the possibility of noise on the LED drive signal coupling onto the supply rail provided by terminal P8.

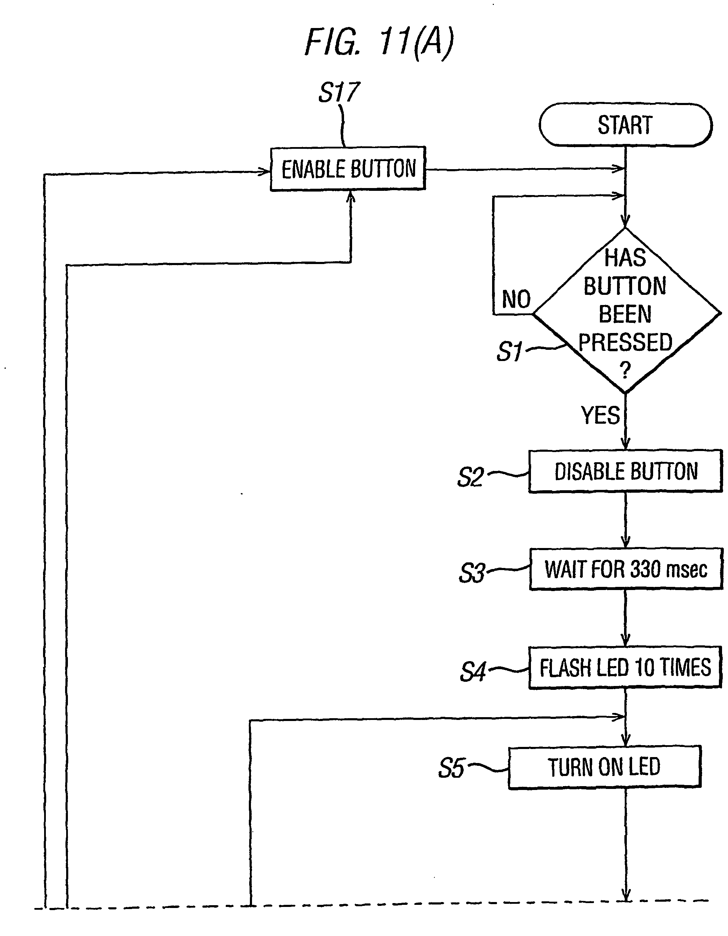

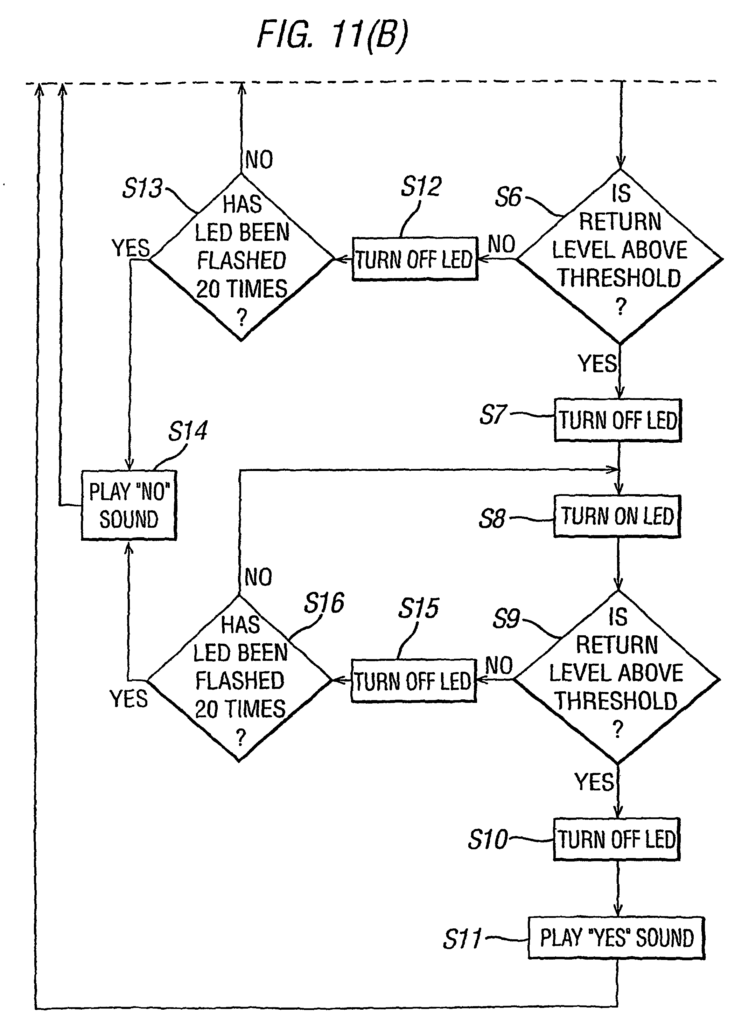

Figure 11 shows a flow chart for illustrating the operations carried out by the control processor 21. In this embodiment, the control processor has a 500 microsecond instruction time which causes the emitter 10 to provide 1.5 millisecond pulses with a 2:1 mark space ratio.

Referring now to Figure 11, the detector pen 1 remains in standby mode (with an approximately 5 microamp current consumption) until the button 7 is activated by the user positioning the lens 6 on an area of the printed substrate. While the detector 1 is in standby mode, the control processor 21 monitors for a signal from the button 7 at step S1. As mentioned above, in the standby mode, the pre-amplifier and non-inverting amplifiers are not powered up.

When the control processor 21 determines at step S1 that the button 7 has been pressed, the control processor 21 disables the button 7 at step S2 so that it cannot respond to further depression of the button and at step S3 waits for a short time, in this example 330 milliseconds to allow the power to the supply rails to stabilise. The control processor 21 then causes the drive circuit 20 to cause the LED 10 to flash or pulse 10 times to charge up the AC coupled filter stages and to give a visible LED pulse at high active ink levels. The control processor 21 then turns the LED 10 on at step S5 and checks at step S6 whether the signal from the threshold circuit 24 is above threshold, that is whether a pass or fail signal is received. If the answer at step S6 is that the return signal is above the threshold, that is a pass signal is received, the control processor 21 turns the LED 10 off at step S7 and then turns the LED on again at step S8 and checks again at step S9 whether the return signal is above the threshold. The test on the return signal level is thus conducted twice to avoid spurious or false "high" (ie. above threshold) signals. If the answer at step S9 is yes, then the control processor 21 turns off the LED 10 at step S10 and retrieves from its memory an audio file and controls the loudspeaker 9 to emit a "yes" sound at step S11.

If the answer at step S6 is no, that is the return level is below the threshold, then the control processor 21 causes the drive circuit 20 to turn off the LED 10 at step S12, checks at step S13 whether the LED 10 has been flashed 20 times and, if not returns to step S5. If the answer at step S13 is yes, then the control processor 21 determines that the return signal is confirmed to be below threshold and retrieves from its memory the audio file to cause the loudspeaker to emit a "no" sound at step S14.

If the answer at step S9 is no, then the control processor 21 causes the drive circuitry 20 to turn off the LED at step S15, checks at step S16 whether the LED has been flashed 20 times. If the answer is no, then the control processor returns to step S8, if however, the answer is yes, then the control processor proceeds to step S14, that is it causes the loudspeaker 9 to issue the "no" sound.

After either step S11 or S14, the control processor reenables the switch or button 7 at step S17 and returns to the standby mode at step S1 awaiting further pressing of the button 7.

It will thus be seen that, in this embodiment, when the return signal is below threshold nineteen more attempts to initiate a pass signal are tried before a final decision that the return signal is a fail signal (that is no fluorescence has been detected) is taken by the control processor 21. It will, of course, be appreciated that the number of times the return signal is tested may be varied so that it may be less or more than 20 times. Repeated testing of the return signal improves the accuracy of the result by enabling statistical processing on the results so that, for example, a single high signal in twenty tests will be taken to be a negative result whereas the result will be considered positive (ie. fluorescent ink detected) if one in four return signals is a high signal.

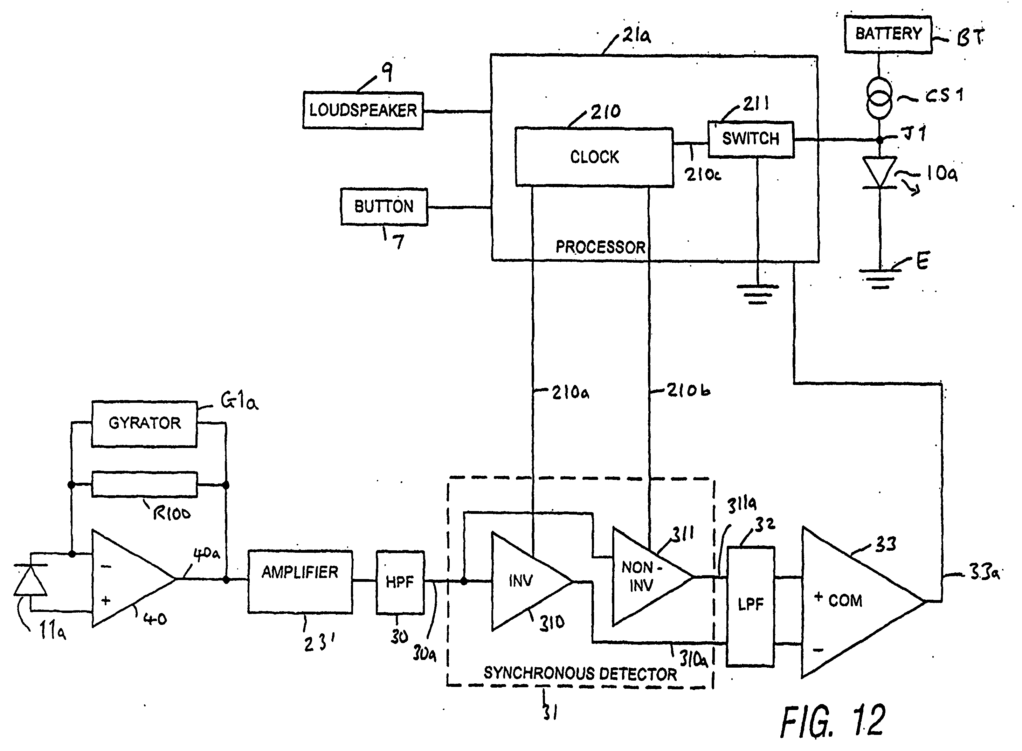

Figure 12 shows a block diagram illustrating functional components of another example of a detector pen that may be used.

As in the examples shown in Figure 7, the detector pen has a control processor 21a coupled to the user input switch or button 7 to enable the detector pen to be activated by the user and also coupled to provide an output signal to the loudspeaker 9 in a manner similar to that described above. In this example, the emitter drive circuit comprises a current source CS1 driven by a battery BT. As will be appreciated, the battery BT will be coupled to the other functional components of the detector pen that require a power supply. However, in the interest of simplicity, these connections are not shown in Figure 12. The current source CS1 is coupled to earth or ground E via the light emitting diode 10a. A junction J1 between the current source CS1 and the anode of the light emitting diode 10a is coupled to a switch 211 provided in the processor 21a as an "open drain" FET. The control electrode or gate of the switch 211 is coupled to receive a clock signal output 210c from a clock 210 of the processor 21a so that the switch 211 is switched on and off at the frequency of the clock signal causing the light emitting diode 10a to be shorted out periodically at a period determined by the clock signal frequency 210 so that the light emitting diode 10a provides a pulsed output in a manner similar to that described above. Shorting out the light emitting diode 10a rather than switching it on and off to provide the pulses avoids the need for extensive decoupling circuitry as described above.

The light detecting diode 11a is, in this example, coupled between the negative and positive inputs of an operational amplifier 40 having a feedback resistor R100 coupled between its output 40a and its negative or inverting input. A gyrator Gla is coupled across the resistor R100 to provide, as described above, an inductor-less filter to filter out unwanted signals such as ambient artificial light which may have a mains AC frequency component.

The output of the operational amplifier 40 is coupled via an amplifier 23' and a high pass filter 30 to a synchronous detector 31. The gyrator Gla may have the configuration of the gyrator G1 shown in Figure 10. The amplifier stage 23' consists of amplifier stages which may have the configuration of the amplifier stages 232a, 232b and 232c shown in Figure 9a. In this example, the high pass filter 30 is provided by a capacitor.

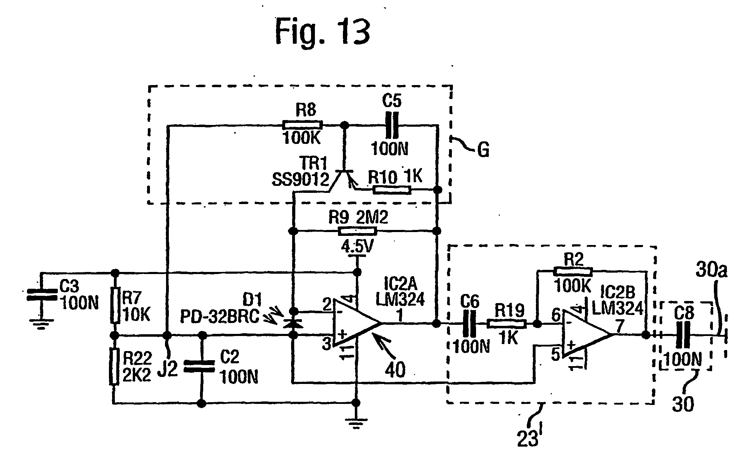

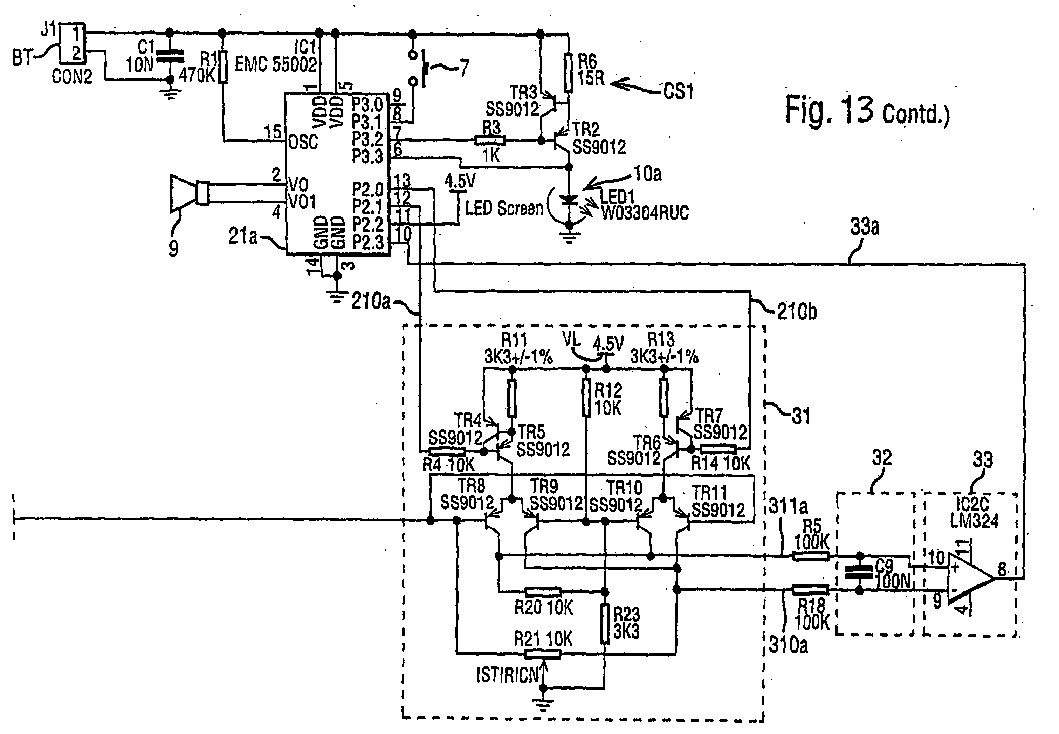

The synchronous detector will be described in greater detail below with respect to Figure 13. In functional terms, however, the synchronous detector 31 effectively consists of an inverting amplifier 310 and a non-inverting amplifier 311 both coupled to receive the output 30a of the high pass filter. The inverting amplifier 310 is enabled by a signal from the processor clock 210 supplied on signal line 210a while the non-inverting amplifier 311 is enabled by a signal supplied from the clock on signal line 210b. The clock signals on lines 210a and 210b provides enablement signals that are 180° out of phase with one another so that one of the amplifiers 310 and 311 provide a signal representing the fluorescent light detected by the photo-detector 11a during a first half of a cycle and the other provides an output representing the fluorescent light detected during the other half of a cycle. In each case, the non-enabled amplifier provides a reference output. The outputs 310a and 311a of the amplifier 310 and 311 are supplied via a low pass filter 32 to respective ones of positive and negative inputs of a comparator 32 which provides on output line 33a a signal to the processor 21a representing the flourescent radiation emitted by the substrate and detected by the photodetector 11a.

The synchronous detector 31 and low pass filter 32 effectively form a very narrow pass band filter and, because the synchronous detector 31 is controlled by the clock 210 of the processor 21a and the shorting out of the light emitting diode 10a is similarly controlled by the clock 210 of the processor 21a, any drift in the clock frequency is automatically compensated for enabling the use of relatively cheap microprocessors that do not have a crystal oscillator.

Figure 13 shows a circuit diagram representing one implementation of the functional components shown in Figure 12. The reference signs identifying the capacitors, resistors, operational amplifiers and transistors shown in Figure 13 are specific to Figure 14 so the fact that the same reference sign may be used in Figure 13 as in an earlier Figure does not indicate that these are the same components.

As can be seen from a comparison of Figure 13 and Figure 10, the implementation shown in Figure 13 uses is a different form of gyrator. Thus, in this example, the gyrator Gla consists of a PNP transistor TR1 having its collector coupled to one end of the feedback resistor R9 and its emitter coupled to the other end via a resistor R10. The emitter of the transistor TR1 is also coupled to its base via the resistor R10 and a capacitor C5 and to a junction J2 coupled to the positive input of the amplifier 40 via a resistor R8. As another possibility, the gyrator Gla may have the configuration shown in Figure 10.

In the configuration shown in Figure 13, the amplifier 23a consists of a number of amplifier stages (only one of which is shown) each having the configuration shown in Figure 9a such that the amplifier provides, in this example, a gain of 100. In this case, the high pass filter 30 comprises a capacitor C8 coupled between the output of the amplifier stage 23a and the synchronous detector 31 while the low pass filter 32 comprises a capacitor C9 coupled between the positive and negative inputs of the comparator 33.

In the implementation shown in Figure 13, the current source CS1 for the photodiode 10a consists of a Wilson current mirror with a resistor R6 in place of the usual diode-connected transistor. As shown in Figure 14, the synchronous detector comprises two Wilson current mirrors consisting of resistor R11, transistors TR4 and TR5 and resistor R13 and transistors TR6 and TR7, respectively with the coupled collector and base of transistors TR4 and TR5 coupled via the resistor R4 to the output line 210a from the processor 21a and the coupled collector and base of transistors TR7 and TR6 coupled via resistor R14 to output line 210b from the processor 21a. The bases of transistor TR4 and TR7 are coupled via the resistors R11 and R13 to the positive voltage supply line VL (in this case 4.5 volts) provided by the battery. The collectors of transistors TR5 and TR6 are connected to respective long tail pairs consisting of transistors TR8 and TR9 and TR10 and TR11 respectively. The bases of transistors TR8 and TR11 are coupled to the output line 30a from the high pass filter 30 with the base of transistor TR8 being coupled via resistor R10 and resistor R23 to earth or ground and the base of transistor TR10 being coupled via resistor R23 to ground. The bases of transistors TR9 and TR10 are coupled together and to the power supply line VL via resistor R12. The collectors of transistors TR9 and TR11 are coupled together and via resistor R18 to the negative input of the comparator 33 while the collectors of transistors TR8 and TR10 are coupled together and by a resistor R5 to the positive input of the comparator 33. The collectors of transistors TR8 and TR11 are coupled via a resistor R21 to earth with the resistor R21 being effectively a potentiometer having an adjustable wiper enabling adjustment of the switching level. It will, of course, be appreciated that resistors R11 and R13 are matched as are the PNP transistors forming the synchronous detector 31.

The components shown in Figure 13 may have the component values illustrated in that Figure. In this particular implementation PNP rather than NPN transistors are used for compatibility with the processor. Where this is not a requirement, then NPN transistors may be used with appropriate modification of the circuitry as will be evident to the person skilled in the art.

In the above described embodiments, the user is informed of the results of the detection by means of an audio signal from the loudspeaker 9. This audio signal may, as described above, represent the sound "yes" or "no", depending upon whether a pass or fail threshold signal is received. As another possibility, different tones may be used to indicated pass and fail. If the memory of the control processor allows, then, a longer message than simply "yes" or "no" may be provided, for example, a message such as "yes that answer is correct" and "no that answer is not correct" respectively.

Where the size of the pen detector permits, then a user may be informed of the results of the detection by visible rather than audible means. Thus, for example, the control processor 21 may be arranged to activate a green or a red LED provided on the exterior of the casing 4 depending on whether a pass or fail return signal is received.

In another embodiment, the pen may be arranged to be coupled to a base module comprising a processor with associated memory, a display such as an LCD display and a loudspeaker output which may enable more detailed messages to be supplied to the user in response to the detection results of the detector pen.

In the above described embodiments, the presence or absence of the fluorescent ink on the printed substrate 3 is used to enable the detector 1 to advise the user whether the user has selected the correct answer to a question.

The detector pen may be used in other forms of toys or games, for example, the detector pen may be used in tracing games for following a printed path which is visually defined by the printing on the printed surface and is also defined by the fluorescent ink. In this case, when the user inadvertently moves the pen off the printed path, the detector pen will provide the user with a warning sound, for example, a buzzing noise via the loudspeaker. Such chasing games may be used to improve hand eye coordination.

In the above described embodiments, the detector is in the form of a pen shaped object. It will, of course, be appreciated that the detector may have any desired shape and may, for example, mimic a computer mouse or may have the shape of a model vehicle, for example.

In the above described embodiments, the printed substrate is printed using conventional inks with the fluorescent black ink being commercially available from Luminescence Inc of The Fairway, Bush Fair, Harlow, Essex, United Kingdom under Part No. 6848LI. It will be appreciated, however, that other fluorescent black inks may be used provided that they are capable of being excited into fluorescence by radiation of the wavelength emitted by the LED 10 and provide fluorescence in the wavelength range detectable by the detector 11. Of course, the present invention is not limited to the particular excitation wavelength and flourescent wavelength mentioned above and may be implemented using different excitation and fluorescent wavelengths, dependent upon the particular fluorescent ink chosen and the transmission and the reception characteristics of the available radiation emitter 10 and detector 11. Also the non-fluorescent and fluorescent inks may have a visible colour other than black, for example cyan, magenta or yellow.

In the above described embodiments, the detector and printed substrate form a games apparatus which may be an amusement or educational toy. As mentioned, above the printed substrate 3 may comprise one of a set of printed substrates which may be independent from one another or may be coupled together in book form.

As another example, games apparatus embodying the present invention may implement a clue finder type of game. In this case, the printed substrate 3 will be printed with images of a number of different items (for example, a house, a road, a lake, people and objects) and the goal of the game will be for the user to detect a character hidden in the picture and printed with the fluorescent ink. In this case, the user attempts to find the hidden character by playing the detector pen on the printed substrate until he or she hears a signal from the detector indicating that they have detected the character.

The fluorescent ink may also be used to hide codes within an image on the printed substrate so that when a user runs the pen across a particular code, the control processor 21 will provide an output dependent upon the particular code detected. Different codes may be superimposed upon different images on a printed substrate so that the control processor provides a different response, dependent upon the particular code detected. Thus, the control processor 21 may access a different audio file and thus issue a different message for each different code. For example, where the printed substrate shows images of different animals, then the code provided by the fluorescent ink pattern associated with an image may cause the control processor to access an audio data file which causes the loudspeaker to issue a sound mimicking the voice or call of that animal.

As mentioned above, output of the control processor may be coupled to a furthermore sophisticated games module so that the information derived by the detector pen as a result of the user placing or running the detector pen across a printed substrate may control actions or functions within a computer controlled game for example.

In the above described embodiments, the detector is activated by contact of the lens 6 with the printed substrate 3 which causes activation of the switch 7. This need not necessarily be the case and, for example, the detector may be a non-contact detector which is activated by a user operable switch. Also, in the above described embodiment, the detector remains in a standby mode while it is powered by its battery. As another possibility, however, the detector may also be provided with a manually operable on/off switch so that the detector can be completely closed down for, for example, storage. In addition different optical arrangements, with or without lenses may be used.

In the above described embodiments, the return signal from the detector is a digital pass/fail signal. The detector may, however, be arranged to detect different thresholds of return signal with each different threshold being determined by the percentage or ratio of fluorescent ink within a predetermined area on the printed substrate. At least four different threshold levels should be possible enabling the fluorescent ink pattern printed on the printed substrate to convey more sophisticated or complicated information and/or codes.

As described above, the detector may be configured to mimic a computer mouse and may be coupled to a personal computer or games console via a cable or remote (infrared, RF comparative or conductive) enabling the information hidden in the fluorescent ink printed patterns provided on the printed substrate 3 to affect operation of applications on the personal computer, for example, to effect the game play of a computer game.

In the example of printed substrates shown in Figures 2 to 4 a question is printed on the card. This need not necessarily be so and, for example, the question may be suggested as an audio signal via the loudspeaker or via a personal computer or games console to which the detector is coupled.

The present invention may have applications outside the games industry. For example, the present invention may be used in the publishing industry in the form of merchandising, promotional and publishing products so that, for example, positioning of the pen on a part of an image or moving the pen across a part of an image on the printed substrate causes an advertising or technical information message associated with that image to be output to the user via the loudspeaker.

The substrates shown in Figures 2 to 4 may each be provided as a plurality of subsidiary substrates each carrying one answer or one image.

## Claims

1. An information providing system, comprising:
a substrate (3a; 3b; 3c) carrying at least one first region (B1 or B2; m or m'; L1 or L2) printed with a first ink and at least one second region (B2 or B1; m' or m; L2 or L1) printed with a second ink, the first and second inks appearing to the human eye to be the same colour but only one of the first and second inks emitting radiation of a first wavelength in response to receipt of radiation of a second wavelength different from the first wavelength;
a detector (4) for detecting radiation of the first wavelength, the detector (4) being configured to receive radiation from the one of the first and second regions at which the detector is directed and being arranged to provide a detection signal indicating whether or not radiation of the first wavelength has been detected from the region at which the detector is directed; and
user advising means (9) for providing a user with information on the basis of whether or not the detector is receiving radiation of the first wavelength, thereby enabling the user to determine information concerning the region at which the detector (4) is directed.

2. An information providing system according to claim 1, wherein the first and second regions (B1 or B2; m or m'; L1 or L2) comprise printed matter containing, respectively, a correct and an incorrect answer to a question and the apparatus further comprises determining means (21) for determining from the detection signal whether or not the user has selected a correct answer and the user advising means (9) is arranged to advise the user, in response to the determination made by the determining means, whether the use has selected a correct answer.

3. An information providing system according to claim 2, wherein the first and second regions (B1 and B2) comprise visually discernible dots printed on the substrate adjacent respective ones of correct and incorrect answers to a question.

4. An information providing system according to claim 1, wherein each of the first and second regions (L1 and L2) comprises an images comprising at least one of a line drawing and an outlined image, wherein in a first region a line forming at least part of an image having a given property comprises the first ink and in a second region a line forming at least part of an image not having that property comprises the second ink, the system further comprising determining means (21) for determining from the detection signal whether or not the user has selected an image having the given property, and the user advising means (9) being arranged to advise the user whether or not an image having the given property has been selected in response to the determination by the determining means.

5. An information providing system according to claim 1, wherein the first and second regions (m and m¹) comprise printed images each image having provided thereon a matrix of ink dots that does not obscure the image, wherein the first and second region images have respective first and second characteristics and the matrices provided on the first and second region images comprise the first ink and the second ink, respectively, the system further comprising determining means (21) for determining from the detection signal whether the user has selected an image having the first or second characteristic and wherein the user advising means (9) is responsive to the determining means to advise the user whether the user has selected an image having the first or second characteristic.

6. An system according to claim 5, wherein each matrix (m and m') has a low print duty ratio, for example the ink dots forming a matrix occupy only 5% of the area covered by the matrix.

7. System according to any one of the preceding claims, wherein the printed matter comprises printed regions having different proportions of said one ink and the detector (9) is arranged to provide a different detector signal dependent upon the amount of received radiation and thus the proportion of said one ink detected by the detector.

8. System according to any of the preceding claims, wherein the first and second inks have at least one of the following features: the first wavelength is 700 nanometres; the second wavelength is 660 nanometres; and the first and second inks are black inks.

9. System according to any one of the preceding claims, wherein the detector (9) comprises a radiation emitting element (10) for emitting radiation of the second wavelength.

10. System according to any one of the preceding claims, wherein the detector comprises a detector casing (5) containing an optical head assembly (6) and an activation switch (7), the optical head assembly carrying a detection element (11) for detecting radiation of the second wavelength and the optical head assembly (6) being movable within the housing towards the switch (7) such that, in operation, when the user touches the substrate with the detector (9), the optical head assembly (6) moves to actuate the switch (17) to activate the detector (9).

11. System according to claim 10 when dependent on claim 9, wherein the emitting and detecting elements (10 and 11) are coupled to respective light guides (12 and 13) provided by the optical head assembly (6), the light guides (12 and 13) being angled towards one another so that light path from the respective light guides intersect at the substrate.

12. System according to Claim 9 or 11 or claim 10 when dependent on claim 9, wherein control means (21) are provided for causing the emitting element (10) to pulse on and off a predetermined number of times and to cause the detection signal to be provided only when radiation of the first wavelength has been detected said predetermined number of times.

13. System according to claim 12, wherein the control means is arranged to cause the emitting element (10) to pulse on or off or flash a set number of times when the detector (9) does not detect radiation of the first wavelength and to cause a detection signal indicating that radiation of the first wavelength has not been detected to be provided only after that no radiation of said first wavelength has been detected in each of said set number of pulses of the emitting element (10).

14. System according to any one of the preceding claims, wherein a plurality of said substrates (2, 3a, 3b, 3c) are provided or said substrate comprises a plurality of subsidiary substrates each carrying at least one answer or image and, for example, said plurality of substrates are coupled together to form a book or leaflet.

15. A printed product having the features of the substrate or substrates set out in any of the preceding claims.

16. A toy or educational game comprising system in accordance with any of claims 1 to 14, a printed product in accordance with claim 15.

## Patentansprüche

1. Informationsdarstellungssystem, ausweisend:
ein Substrat (3a; 3b; 3c), das mindestens einen mit einer ersten Farbe bedruckten ersten Bereich (B1 oder B2; m oder m'; L1 oder L2) und mindestens einen mit einer zweiten Farbe bedruckten zweiten Bereich (B2 oder B1; m' oder m; L2 oder L1) trägt, wobei die erste und die zweite Farbe dem menschlichen Auge in gleicher Farbe erscheinen, jedoch von beiden lediglich eine aufgrund des Empfangs einer Strahlung einer von einer ersten Wellenlänge verschiedenen zweiten Wellenlänge Strahlung der ersten Wellenlänge abgibt;
einen Detektor (4) zur Erfassung von Strahlung der ersten Wellenlänge, der eingerichtet ist, vom ersten oder zweiten Bereich, auf den der Detektor ausgerichtet ist, Strahlung zu empfangen und ein Erfassungssignal zu liefern, das angibt, ob von dem Bereich, auf den der Detektor ausgerichtet ist, Strahlung der ersten Wellenlänge erfaßt wurde, und
eine Benutzermitteilungseinrichtung (9), um einem Benutzer daraufhin, ob der Detektor Strahlung der ersten Wellenlänge empfängt, eine Information zu geben und ihn dadurch eine Information über den Bereich, auf den der Detektor (4) ausgerichtet ist, bestimmen zu lassen.

2. System nach Anspruch 1, wobei der erste und der zweite Bereich (B1 oder B2; m oder m'; L1 oder L2) einen gedruckten Gegenstand enthalten, der entsprechenderweise eine richtige und eine unrichtige Antwort auf eine Frage enthält, und das System außerdem eine Bestimmungseinrichtung (21) enthält, um aus dem Erfassungssignal zu bestimmen, ob der Benutzer eine richtige Antwort ausgewählt hat, und wobei die Benutzermitteilungseinrichtung (9) eingerichtet ist, dem Benutzer aufgrund der von der Bestimmungseinrichtung ausgeführten Bestimmung mitzuteilen, ob die Verwendung eine richtige Antwort ausgewählt hat.

3. System nach Anspruch 2, wobei der erste und der zweite Bereich (B1 und B2) mit dem Auge erkennbare Punkte enthalten, die jeweils neben richtigen und unrichtigen Antworten auf eine Frage auf das Substrat gedruckt sind.

4. System nach Anspruch 1, wobei der erste und der zweite Bereich (L1 und L2) jeweils ein Bild mit einer Strichzeichnung und/oder einem Umrißbild enthalten, wobei eine Linie, die mindestens einen Teil eines Bilds mit einer gegebenen Eigenschaft bildet, im ersten Bereich die erste Farbe und eine Linie, die mindestens einen Teil eines Bilds ohne diese Eigenschaft bildet, im zweiten Bereich die zweite Farbe beinhaltet, das System außerdem eine Bestimmungseinrichtung (21) enthält, um aus dem Erfassungssignal zu bestimmen, ob der Benutzer ein Bild mit der gegebenen Eigenschaft ausgewählt hat, und die Benutzermitteilungseinrichtung (9) eingerichtet ist, dem Benutzer aufgrund der Bestimmung durch die Bestimmungseinrichtung mitzuteilen, ob ein Bild mit der gegebenen Eigenschaft ausgewählt wurde.

5. System nach Anspruch 1, wobei der erste und der zweite Bereich (m und m') Druckbilder enthalten, von denen jedes mit einer Matrix aus Farbpunkten versehen ist, die das Bild nicht stört, wobei die Bilder des ersten und des zweiten Bereichs entsprechenderweise eine erste und eine zweite Eigenschaft aufweisen und die auf den Bildern des ersten und des zweiten Bereichs vorgesehenen Matrizen entsprechenderweise die erste und die zweite Farbe enthalten, das System außerdem eine Bestimmungseinrichtung (21) aufweist, um aus dem Erfassungssignal zu bestimmen, ob der Benutzer ein Bild mit der ersten oder der zweiten Eigenschaft ausgewählt hat, und wobei die Benutzermitteilungseinrichtung (9) dem Benutzer auf die Bestimmungseinrichtung ansprechend mitteilt, ob er ein Bild mit der ersten oder der zweiten Eigenschaft ausgewählt hat.

6. System nach Anspruch 5, wobei jede Matrix (m und m') einen niedrigen Druck-Deckungsgrad aufweist und die eine Matrix bildenden Farbpunkte beispielsweise lediglich 5% der von der Matrix bedeckten Fläche einnehmen.

7. System nach einem der vorhergehenden Ansprüche, wobei der gedruckte Gegenstand gedruckte Bereiche mit verschiedenen Anteilen der genannten einen Farbe enthält und der Detektor (9) zur Lieferung eines jeweils anderen Detektorsignals in Abhängigkeit von der Menge empfangener Strahlung und somit von dem von ihm erfaßten Anteil der einen Farbe eingerichtet ist.

8. System nach einem der vorhergehenden Ansprüche, wobei die erste und die zweite Farbe mindestens eines der folgenden Merkmale aufweisen: die erste Wellenlänge beträgt 700 Nanometer, die zweite Wellenlänge beträgt 660 Nanometer und die erste und die zweite Farbe ist jeweils eine schwarze Farbe.

9. System nach einem der vorhergehenden Ansprüche, wobei der Detektor (9) ein strahlungsaussendendes Element (10) zum Aussenden von Strahlung der zweiten Wellenlänge enthält.

10. System nach einem der vorhergehenden Ansprüche, wobei der Detektor ein eine Optokopfanordnung (6) und einen Aktivierungsschalter (7) enthaltendes Detektorgehäuse aufweist, wobei die Optokopfanordnung ein Erfassungselement (11) zur Erfassung von Strahlung der zweiten Wellenlänge trägt und innerhalb des Gehäuses zum Schalter (7) hin bewegbar ist, so daß im Betrieb dann, wenn der Benutzer mit dem Detektor (9) das Substrat berührt, sich die Optokopfanordnung (6) unter Betätigung des Schalters (7) und Aktivierung des Detektors (9) bewegt.

11. System nach Anspruch 10, sofern von Anspruch 9 abhängig, wobei das aussendende und das Erfassungselement (10 und 11) an entsprechende Lichtleiter (12 und 13) gekoppelt sind, die von der Optokopfanordnung (6) bereitgestellt werden und so im Winkel zueinander stehen, daß sich ihre jeweiligen Lichtwege am Substrat schneiden.

12. System nach Anspruch 9 oder 11 oder 10, wenn von Anspruch 9 abhängig, wobei eine Steuereinrichtung (21) vorgesehen ist, um das aussendende Element (10) zu veranlassen, mit vorbestimmter Anzahl einen Impuls zu geben und zu beenden, und zu veranlassen, daß das Erfassungssignal lediglich dann geliefert wird, wenn Strahlung der ersten Wellenlänge mit der vorbestimmten Anzahl erfaßt wurde.

13. System nach Anspruch 12, wobei die Steuereinrichtung eingerichtet ist, das aussendende Element (10) zu veranlassen, mit einer vorgegebenen Anzahl zu blinken oder einen Impuls zu geben oder zu beenden, wenn der Detektor (9) keine Strahlung der ersten Wellenlänge erfaßt, und zu veranlassen, daß ein Erfassungssignal, das angibt, daß Strahlung der ersten Wellenlänge nicht erfaßt wurde, nur geliefert wird, nachdem in keinem der vorgegebenen Anzahl an Impulsen des aussendenden Elements (10) Strahlung der ersten Wellenlänge erfaßt wurde.

14. System nach einem der vorhergehenden Ansprüche, wobei mehrere der Substrate (2, 3a, 3b, 3c) vorgesehen sind oder das Substrat mehrere Hilfssubstrate aufweist, die jeweils mindestens eine Antwort oder ein Bild tragen, und die Substrate beispielsweise unter Bildung eines Buchs oder Hefts miteinander verbunden sind.

15. Druckwerk mit den Merkmalen des Substrats oder der Substrate nach einem der vorhergehenden Ansprüche.

16. Spielzeug oder Lehrspiel mit einem System nach einem der Ansprüche 1 bis 14 bzw. einem Druckwerk nach Anspruch 15.

## Revendications

1. Système fournissant une information, comprenant :
un substrat (3a ; 3b ; 3c) portant au moins une première région (B1 ou B2 ; m ou m' ; L1 ou L2) imprimée avec une première encre et au moins une deuxième région (B2 ou B1 ; m' ou m ; L2 ou L1) imprimée avec une deuxième encre, les première et deuxième encres apparaissant à l'oeil humain comme étant de la même couleur, mais une seule des première et deuxième encres émettant un rayonnement d'une première longueur d'onde en réponse à la réception d'un rayonnement d'une deuxième longueur d'onde différente de la première longueur d'onde ;
un détecteur (4) pour détecter un rayonnement de la première longueur d'onde, le détecteur (4) étant configuré pour recevoir un rayonnement en provenance de l'une de la première et de la deuxième régions au niveau de laquelle le détecteur est dirigé et étant agencé pour fournir un signal de détection indiquant si un rayonnement de la première longueur d'onde a ou non été détecté en provenance de la région au niveau de laquelle le détecteur est dirigé ; et
un moyen (9) d'avertissement d'utilisateur pour fournir à un utilisateur une information sur la base du fait que le détecteur est ou non en cours de réception d'un rayonnement de la première longueur d'onde, afin de permettre à l'utilisateur de déterminer une information concernant la région au niveau de laquelle le détecteur (4) est dirigé.

2. Système fournissant une information selon la revendication 1, dans lequel les première et deuxième régions (B1 ou B2 ; m ou m' ; L1 ou L2) comprennent une matière imprimée contenant, respectivement, une réponse correcte et une réponse incorrecte à une question, et l'appareil comprend en outre un moyen (21) de détermination pour déterminer, à partir du signal de détection, si l'utilisateur a ou non sélectionné une réponse correcte et le moyen (9) d'avertissement d'utilisateur est agencé pour avertir l'utilisateur, en réponse à la détermination faite par le moyen de détermination, du fait que l'utilisateur a ou non sélectionné une réponse correcte.

3. Système fournissant une information selon la revendication 2, dans lequel les première et deuxième régions (B1 et B2) comprennent des points qui peuvent être discernés visuellement, imprimés sur le substrat dans une position adjacente aux réponses respectives correcte et incorrecte à une question.

4. Système fournissant une information selon la revendication 1, dans lequel chacune des première et deuxième régions (L1 et L2) comprend une image comprenant au moins l'un, d'un dessin de ligne et d'une image à contour, dans lequel, dans une première région, une ligne formant au moins une partie d'une image ayant une propriété donnée comprend la première encre, et dans une deuxième région, une ligne formant au moins une partie d'une image n'ayant pas cette propriété comprend la deuxième encre, le système comprenant en outre un moyen (21) de détermination pour déterminer, à partir du signal de détection, si l'utilisateur a ou non sélectionné une image ayant la propriété donnée, et le moyen (9) d'avertissement d'utilisateur étant agencé pour avertir l'utilisateur du fait qu'une image ayant la propriété donnée a ou non été sélectionnée en réponse à la détermination faite par le moyen de détermination.

5. Système fournissant une information selon la revendication 1, dans lequel les première et deuxième régions (m et m') comprennent des images imprimées, sur chaque image étant disposée une matrice de points d'encre qui n'obscurcissent pas l'image, dans lequel les images de la première et de la deuxième régions ont respectivement des première et deuxième caractéristiques, et les matrices disposées sur les images des première et deuxième régions comprennent la première encre et la deuxième encre, respectivement, le système comprenant en outre un moyen (21) de détermination pour déterminer, à partir du signal de détection, si l'utilisateur a ou non sélectionné une image ayant la première ou la deuxième caractéristique, et dans lequel le moyen (9) d'avertissement d'utilisateur est sensible au moyen de détermination pour avertir l'utilisateur du fait que l'utilisateur a ou non sélectionné une image ayant la première ou la deuxième caractéristique.

6. Système selon la revendication 5, dans lequel chaque matrice (m et m') a un faible rapport d'utilisation d'impression, par exemple les points d'encre formant une matrice occupent seulement 5 % de la zone couverte par la matrice.

7. Système selon l'une quelconque des revendications précédentes, dans lequel la matière imprimée comprend des régions imprimées ayant différentes proportions de ladite première encre et le détecteur (9) est agencé pour fournir un signal de détecteur différent; en fonction de la quantité de rayonnement reçue et, par conséquent, de la proportion de ladite première encre détectée par le détecteur.

8. Système selon l'une quelconque des revendications précédentes, dans lequel les première et deuxième encres ont au moins l'une des caractéristiques suivantes : la première longueur d'onde est de 700 nanomètres ; la deuxième longueur d'onde est de 660 nanomètres ; et les première et deuxième encres sont des encres noires.

9. Système selon l'une quelconque des revendications précédentes, dans lequel le détecteur (9) comprend un élément (10) émettant un rayonnement pour émettre un rayonnement de la deuxième longueur d'onde.

10. Système selon l'une quelconque des revendications précédentes, dans lequel le détecteur comprend un boîtier (5) de détecteur, contenant un assemblage (6) de tête optique et un commutateur (7) d'activation, l'assemblage de tête optique portant un élément de détection (11) pour détecter un rayonnement de la deuxième longueur d'onde et l'assemblage (6) de tête optique étant mobile dans le boîtier vers le commutateur (7), de telle sorte qu'en fonctionnement, lorsque l'utilisateur touche le substrat avec le détecteur (9), l'assemblage (6) de tête optique se déplace pour actionner le commutateur (7) afin d'activer le détecteur (9).

11. Système selon la revendication 10 lorsqu'elle dépend de la revendication 9, dans lequel les éléments (10 et 11) d'émission et de détection sont couplés à des guides de lumière respectifs (12 et 13) fournis par l'assemblage (6) de tête optique, les guides de lumière (12 et 13) faisant un angle l'un avec l'autre, de telle sorte que les trajets de lumière à partir des guides de lumière respectifs, se coupent au niveau du substrat.

12. Système selon la revendication 9 ou 11 ou la revendication 10 lorsqu'elle dépend de la revendication 9, dans lequel des moyens (21) de commande sont utilisés pour amener l'élément (10) d'émission à pulser en et hors service un nombre prédéterminé de fois et pour amener le signal de détection à être fourni uniquement lorsqu'un rayonnement de la première longueur d'onde a été détecté ledit nombre prédéterminé de fois.

13. Système selon la revendication 12, dans lequel le moyen de commande est agencé pour amener l'élément (10) d'émission à pulser en et hors service ou à s'allumer de manière intermittente un nombre établi de fois, lorsque le détecteur (9) ne détecte pas de rayonnement de la première longueur d'onde et pour amener un signal de détection indiquant qu'un rayonnement de la première longueur d'onde n'a pas été détecté, à être fourni uniquement après qu'aucun rayonnement de ladite première longueur d'onde n'a été détecté dans chacun dudit nombre établi d'impulsions de l'élément (10) d'émission.

14. Système selon l'une quelconque des revendications précédentes, dans lequel une pluralité desdits substrats (2, 3a, 3b, 3c) sont utilisés ou ledit substrat comprend une pluralité de substrats subsidiaires portant chacun au moins une réponse ou image et, par exemple, ladite pluralité de substrats sont couplés ensemble pour former un livre ou un feuillet.

15. Produit imprimé ayant les caractéristiques du substrat ou des substrats décrits dans l'une quelconque des revendications précédentes.

16. Jouet ou jeu éducatif comprenant un système selon l'une quelconque des revendications 1 à 14, et un produit imprimé selon la revendication 15.
